# EUROPEAN PATENT SPECIFICATION

(11) **EP 4 418 108 B1**
(45) Date of publication and mention of the grant of the patent: **01.10.2025**
(21) Application number: 24154944.3
(22) Date of filing: 31.01.2024
(51) Int. Cl.: G06F 9/30

(54) **IMPROVED REGISTER BANK FOR ELECTRONIC PROCESSOR AND INITIALIZATION METHOD OF THE REGISTER BANK**
VERBESSERTE REGISTERBANK FÜR EINEN ELEKTRONISCHEN PROZESSOR UND INITIALISIERUNGSVERFAHREN DER REGISTERBANK
BANC DE REGISTRES AMÉLIORÉ POUR PROCESSEUR ÉLECTRONIQUE ET PROCÉDÉ D'INITIALISATION DU BANC DE REGISTRES

(30) Priority: 13.02.2023 IT 202300002409
(43) Date of publication of application: 21.08.2024
(73) Proprietor: STMicroelectronics International N.V., 1228 Plan-les-Ouates, Geneva (CH)
(72) Inventor: LANDI, Sofiane, 84090 SAN MANGO PIEMONTE (SA) (IT); DIMROCI, Enea, 12011 BORGO SAN DALMAZZO (CN) (IT)
(74) Representative: Studio Torta S.p.A.

(56) References cited:
- US-A1- 2020 301 795
- US-B1- 7 363 440

## Description

### TECHNICAL FIELD

The present invention relates to an electronic processor with a register bank and to an initialization method of the register bank. In detail, the register bank comprises registers, in particular of the without-reset type, which are initialized in an initialization mode. Furthermore, it relates to an initialization method of the register bank, to a control method of the electronic processor and to a computer program product thereof.

### STATE OF THE ART

Nowadays, electronic applications have an increasingly widespread transition to the digital domain for the execution of required functionalities and operations. The growing demand for digital data processing capability requires ever greater occupation of the processor area for performing these functionalities and operations.

For example, "Micro Processing Units" (MPU) have gained wide spread thanks to their performances in terms of control, data processing and debugging capabilities.

Several families of MPUs are known. In particular, an open-source solution space, called RISCV, has been commonly used lately.

The RISCV processors are becoming the main choice for implementing generic control logic in IoT applications. This occurs thanks to their open-source nature, which allows greater flexibility of use and customization by the processor designer. In fact, the designer may write code in a high-level language (e.g., C, python, etc.), may translate this code into machine language using a compiler of known type and may make the processor execute the instruction list in the machine language, all this in an independent and autonomous manner.

For this type of applications there are usually present one or more sensors, an analog chain for processing the signals coming from the sensors, and the RISCV processor for processing the information coming from the sensors and for performing operations on the basis of these information.

However, RISCV processors have a significant area size. In particular, the RISCV processor comprises a register bank (also called "register file") which is normally alone responsible for about 70% of the overall occupation of the processor area.

As known, a greater area occupation causes higher costs and power consumption of the processor, as well as a greater risk of congestion of the electrical signals through the electrical connections present in the processor.

One cause of this considerable area occupation and difficult scalability of the register bank is the need to be able to initialize the registers of the register bank to default values (i.e., to be able to reset the memory elements of the registers). This is currently done using, for each memory element, a respective reset line which, when necessary, carries a reset signal to the memory element which causes the initialization thereof. This initialization normally occurs in parallel and therefore substantially simultaneously for all the memory elements of the registers of the register bank, providing each of them with the reset signal through the respective reset line. However, as evident, having a reset line for each memory element causes a considerable occupation of the processor area. Nonetheless, this solution is commonly adopted as it allows the registers of the register bank to be initialized whenever the processor needs to execute a sequence of instructions to complete a task. In fact, without this initialization the processor would not be able to process the right information and therefore could not function properly.

Document US 7 363 440 B1 relates to memory systems, and more particularly, to dynamic accessing of memory while under normal operating conditions.

Document US 2020/301795 A1 relates to instruction generation for validation of processor functionality.

The aim of the present invention is therefore to provide an electronic processor comprising a register bank, an initialization method of the register bank, a control method of the electronic processor and a computer program product thereof which overcome the drawbacks of the prior art, in particular which allow the area of the register bank and therefore its cost, the power consumption and the risk of congestion of the electrical signals of the processor to be reduced.

### SUMMARY OF THE INVENTION

According to the present invention, there are provided an electronic processor comprising a register bank, an initialization method of the register bank, a control method of the electronic processor and a computer program product thereof, as defined in the annexed claims.

### BRIEF DESCRIPTION OF THE DRAWINGS

For a better understanding of the present invention, a preferred embodiment is now described, purely by way of non-limiting example, with reference to the attached drawings, wherein:
- Figure 1 schematically shows the structure of a processor, according to an embodiment;
- Figure 2 schematically shows the interconnections of some components of the processor of Figure 1, according to an embodiment;
- Figure 3 schematically shows the structure of a register bank of the processor of Figure 1, according to an embodiment;
- Figure 4 schematically shows the structure of a register of the register bank of Figure 3, according to an embodiment;
- Figure 5 is a block diagram illustrating a state machine implemented by the processor of Figure 1, according to an embodiment; and
- Figures 6A-6O show, as time varies, electrical signals generated or received by the processor 10 and Figure 6P shows the alternation over time of the states of the state machine of Figure 5, according to an embodiment.

In the following description, elements common to the different embodiments have been indicated with the same reference numerals.

### DETAILED DESCRIPTION OF THE INVENTION

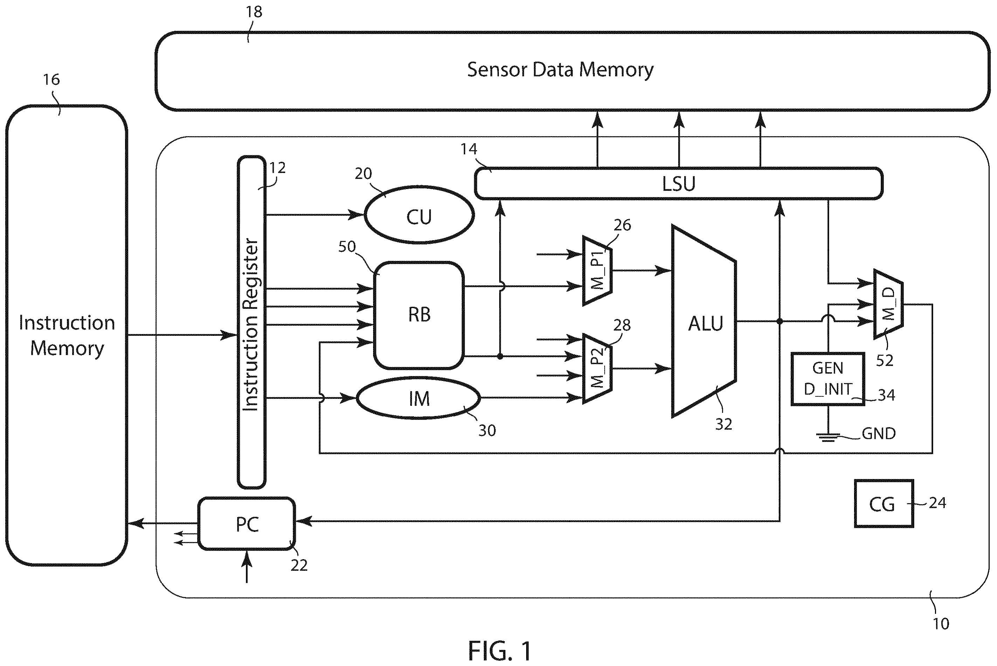

Figure 1 shows the architecture of an electronic processor (hereinafter, referred to as processor for the sake of simplicity) 10.

In particular, the processor 10 is of RISCV type; nevertheless, other types of processors may be similarly considered. By way of example and further description, greater details regarding the ISA ("Instruction Set Architecture") on which the RISCV standard is based, may be found at the link https://riscv.org/technical/specifications/ and in the document "The RISC-V Instruction Set Manual, Volume I: Base User-Level ISA" by Waterman et al., 2011, Technical Report No. UCB/EECS-2011-62 (https://www2.eecs.berkeley.edu/Pubs/TechRpts/2011/EECS-2011-62.pdf).

Figure 1 shows, by way of example, only the main components of the processor 10, for example of RISCV type. However, other components may be present in the processor 10, as evident to the person skilled in the art. For example, greater details regarding the structure of the processor 10 of RISCV type may for example be found in the book "Computer Organization and Design RISC-V edition", by David A. Patterson, John L. Hennessy.

The processor 10 is operatively coupeable to one or more sensors (not shown and of known type), for example through an interface module not shown and of known type (e.g., comprising an analog-to-digital converter and a digital-to-analog converter, amplifiers, filters, etc.). In use, the processor receives, from one or more sensors, respective information which is indicative of measurements carried out by the sensors and is optionally pre-processed by the interface module.

In particular, the processor 10 may comprise a clock generator (CG) 24 configured to generate a clock signal CLK and coupled to the other components of the processor 10 in such a way as to provide the clock signal CLK to each of them.

The processor 10 may comprise an instruction register 12 and a load-and-store unit (LSU) 14. The instruction register 12 comprises a multiplicity of memory registers (in detail, each comprising memory elements such as flip-flops) and is operatively coupeable to an instruction memory 16 (e.g., a random access memory, RAM) external to the processor 10 and configured to store one or more instruction sequences to be executed by the processor 10 so that the latter performs respective tasks. In detail, the instructions stored in the instruction memory 16 are in machine code and represent the translation into machine language of respective instructions of a code written by a programmer in high-level language (e.g., C, Python, Fortran) to perform the respective task and subsequently translated into machine language through a known-type compiler. The instruction register 12 receives instructions from the instruction memory 16 and stores them so that they are available to be executed by the processor 10, when needed. The LSU 14 comprises a multiplicity of memory registers (in detail, each comprising memory elements such as flip-flops) and is operatively coupeable to a sensor data memory 18 (e.g., a RAM) external to the processor 10 and configured to store data, for example data coming from the one or more sensors. Similarly to the instruction register 12, the LSU 14 receives data from the sensor data memory 18 and stores it so that it is available for the execution of the instructions of the processor 10, when needed.

The processor 10 further comprises a control unit (CU) 20 which is configured to receive instructions from the instruction register 12 and to generate a consequent plurality of electrical signals for controlling the components of the processor 10.

The processor 10 may comprise a program counter (PC) 22 controllable by the CU 20 to select addresses of the instruction memory 16 which contain instructions to be passed to the instruction register 12 so that they are executed by the processor 10 in the next steps.

The processor 10 comprises a register bank (RB, also called "register file") 50, better described hereinbelow. The RB 50 is connected to the instruction register 12 to receive from the latter and store the instructions to be executed by the processor 10. In detail and as better described hereinbelow, the RB 50 is controllable by the CU 20 to store the data corresponding to the instructions coming from the instruction register 12 and to send it, in an orderly manner thanks to the control of the CU 20, to the components of the processor 10 which are to process this data to execute the respective instructions.

The processor 10 may also comprise an immediate generator (IM) 30 connected to the instruction register 12 and configured to decode the constant values to be used during the processing, starting from the instruction which is imported from the instruction memory 16.

By way of example, a first main multiplexer (MUX) 26 and a second main MUX 28 which may be comprised in the processor 10 are also shown (in Figure 1 they are also indicated with the abbreviations M_P1 and M_P2, respectively); nevertheless, the number of MUXs in this stage may vary on the basis of the design requirements and may, for example, be greater. The main MUXs 26 and 28 each have a plurality of inputs (e.g., 2 for the first main MUX 26 and 4 for the second main MUX 28) and are controlled in use by the CU 20 to transmit at output one of these inputs, selected by the CU 20. An input of each main MUX 26, 28 is connected to a respective output of the RB 50, while the other inputs may be connected to the output of the PC 22 (e.g., for the first main MUX 26), to the output of the IM 30 (e.g., for the second main MUX 28) and to other components of the processor 10. For example, the inputs and the output of each main MUX 26, 28 have 32 bits.

The processor 10 may also comprise an arithmetic-logic unit (ALU) 32 which has inputs each connected to the output of a respective main MUX 26, 28 and which is configured to process the received data in a per se known manner (e.g., through logic and/or arithmetic operations defined by the CU 20 having the ALU 32 connected thereto to be controlled). For example, the ALU 32 operates with 32-bit data.

The processor 10 may also comprise an initialization datum generation module 34 (indicated in Figure 1 with the abbreviation GEN D_INIT) of a per se known type.

The initialization datum generation module 34 has an input connected to a reference node (in detail, a ground node) GND which has a reference electric potential (for example equal to 0 V).

In particular, the initialization datum generation module 34 is configured to acquire the reference electric potential and to generate, at an output of the initialization datum generation module 34, a corresponding initialization datum (of digital type, hereinafter also indicated, for the sake of simplicity, D_INIT and, for example, having 32 bits).

In particular, D_INIT is of predefined type (i.e. with a fixed and known value) and is indicative of the reference electric potential.

In the example considered, D_INIT is formed by 32 bits with value 0 which are defined starting from 0 V of the reference node GND.

In detail, the initialization datum generation module 34 is of known type and for example comprises a pull-down network (PDN) of known type and therefore pull-down resistors (greater details may be found for example at the link https://www.electronics-tutorials.ws/logic/pull-up-resistor.html).

However, other known structures and techniques are usable to generate D_INIT, in a manner per se evident to the person skilled in the art. For example, D_INIT may be stored in the instruction memory 16 and obtained through the instruction register 12.

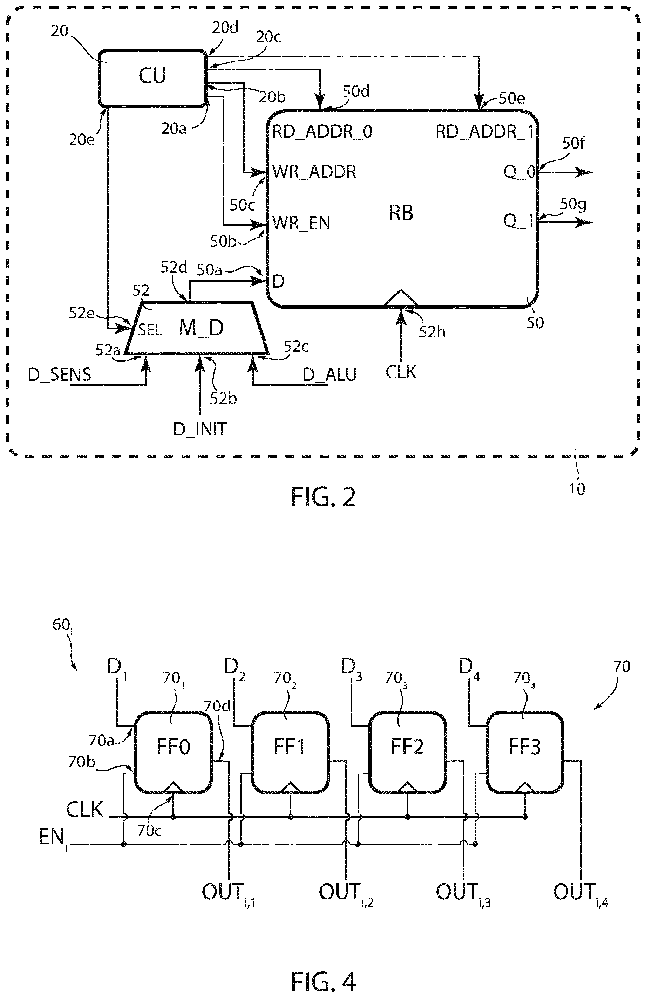

Furthermore, the processor 10 comprises an input datum MUX 52 (indicated in Figure 1 with the abbreviation M_D), which has three inputs and an output and is better shown in Figure 2. A first input of the input datum MUX 52 is connected to the LSU 14 to receive the data coming from the sensor data memory 18, indicative of the measurements of the one or more sensors. A second input of the input datum MUX 52 is connected to the reference node GND (in particular through the initialization datum generation module 34, whose output is connected to the second input of the input datum MUX 52) to acquire D_INIT. A third input of the input datum MUX 52 is connected to the ALU 32 to receive the output data of the latter. Furthermore, the output of the input datum MUX 52 is connected to a data input of the RB 50. The input datum MUX 52 is controlled by the CU 20 to transmit at output the received datum to one of its inputs, as better described hereinbelow. For example, the inputs and the output of each main MUX 26, 28 have 32 bits.

Figure 2 shows, in more detail, some components of the processor 10.

In particular, the RB 50 has a write datum input 50a, a write enable input 50b, a write address input 50c, a first read address input 50d, a second read address input 50e, a first read output 50f, a second read output 50g, and a clock input 50h.

The write datum input 50a is connected to the output of the input datum MUX 52 (indicated in Figure 2 with the reference 52d), the write enable input 50b is connected to a first output 20a of the CU 20, the write address input 50c is connected to a second output 20b of the CU 20, the first read address input 50d is connected to a third output 20c of the CU 20, the second read address input 50e is connected to a fourth output 20d of the CU 20 and the clock input 50h is connected to an output of the CG 24. Furthermore, for example, the first read output 50f is connected to an input of the first main MUX 26 and the second read output 50g is connected to an input of the second main MUX 28.

In use, the write datum input 50a receives, from the input datum MUX 52, a write datum (hereinafter also indicated, for the sake of simplicity, D and, for example, having 32 bits), the write enable input 50b receives, from the CU 20, a write enable signal (hereinafter also indicated, for the sake of simplicity, WR_EN and, for example, having 1 bit), the write address input 50c receives, from the CU 20, a write address signal (hereinafter also indicated, for the sake of simplicity, WR_ADDR and, for example, having 5 bits), the first read address input 50d receives, from the CU 20, a first read address signal (hereinafter also indicated, for the sake of simplicity, RD_ADDR_0 and, for example, having 5 bits), the second read address input 50e receives, from the CU 20, a second read address signal (hereinafter also indicated, for the sake of simplicity, RD_ADDR_1 and, for example, having 5 bits), the first read output 50f sends, to the first main MUX 26, a first read output signal (hereinafter also indicated, for the sake of simplicity, Q_0 and, for example, having 32 bits), the second read output 50g sends, to the second main MUX 28, a second read output signal (hereinafter also indicated, for the sake of simplicity, Q_1 and, for example, having 32 bits) and the clock input 50h receives, from the CG 24, the clock signal (hereinafter also indicated, for the sake of simplicity, CLK). In greater detail, the input datum MUX 52 generates D, the CU 20 generates WR_EN, WR_ADDR, RD_ADDR_0, RD_ADDR_1 and the CG 24 generates the CLK.

By way of example, the RB 50 is described herein considering the case in which it is capable of providing two outputs in parallel (i.e. it is capable of simultaneously generating two data at output, each on a respective output channel Q_0 and Q_1); nevertheless, the number of outputs of the RB 50 may vary and for example be smaller (e.g., 1 single output) or greater (e.g., N>2 outputs), as better described hereinbelow.

As already described, the input datum MUX 52 has the first input (indicated in Figure 2 with the reference 52a), the second input (indicated in Figure 2 with the reference 52b), the third input (indicated in Figure 2 with the reference 52c), the output (indicated in Figure 2 with the reference 52d), and a control input (indicated in Figure 2 with the reference 52e).

The first input 52a is connected to the LSU 14, the second input 52b is connected to the reference node GND, the third input 52c is connected to the ALU 32, the output 52d is connected to the write datum input 50a of the RB 50 and the control input 52e is connected to a fifth output 20e of the CU 20.

In use, the first input 52a receives, from the LSU 14, a sensor datum (hereinafter also indicated, for the sake of simplicity, D_SENS and, for example, having 32 bits), the second input 52b acquires the initialization datum (D_INIT), the third input 52c receives, from the ALU 32, an ALU datum (hereinafter also indicated, for the sake of simplicity, D_ALU and, for example, having 32 bits), the output 52d sends the RB 50 the write datum (D) and the control input 52e receives, from the CU 20, a control signal (hereinafter also indicated, for the sake of simplicity, SEL and, for example, having 2 bits). In greater detail, the LSU 14 generates D_SENS, the reference node GND defines D_INIT, the ALU 32 generates D_ALU, the CU 20 generates SEL and the RB 50 receives D.

For example, D_SENS is indicative of the measurements carried out by the one or more sensors coupeable to the processor 10.

Furthermore, SEL is a signal which allows to select which signal at the input of the input datum MUX 52 is to be transmitted at output to the latter. For example, SEL may assume a first value (e.g., '00'), a second value (e.g., '01') or a third value (e.g., '10'); when SEL='00' the first input 52a is selected and therefore D=D_SENS, when SEL='01' the second input 52b is selected and therefore D=D_INIT, when SEL='10' the third input 52c is selected and therefore D=D_ALU.

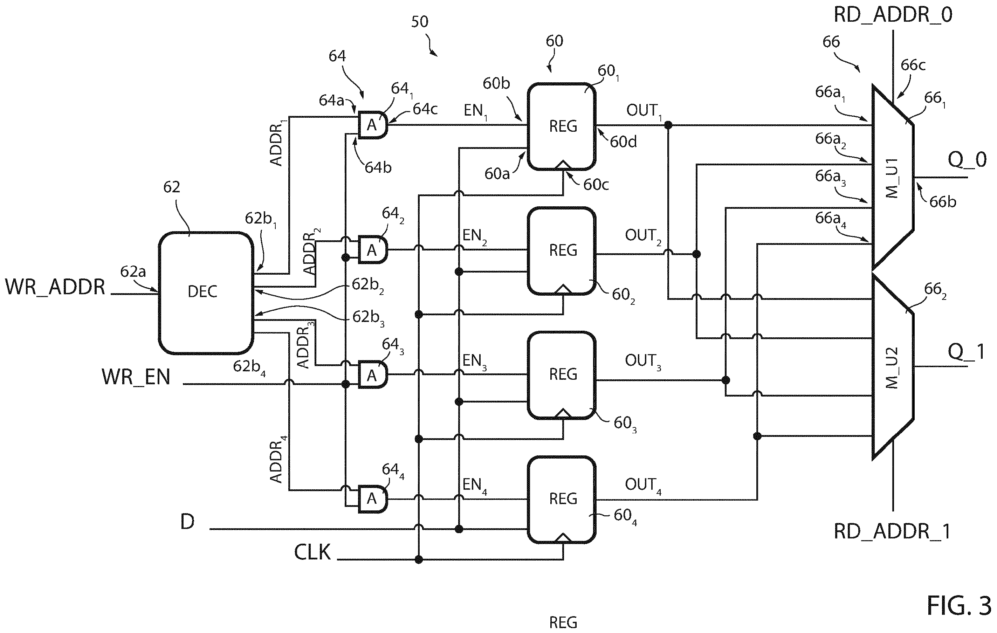

In particular and as better described below with reference to Figure 3, the RB 50 comprises a plurality K₁ of registers (in particular each comprising a plurality K₂ of memory elements, for example flip-flops). In detail, the registers and the memory elements are of the without-reset type. In the example considered, K₂=32 so that each register may store a 32-bit datum.

The RB 50 may operate selectively, at each instant, in an initialization (or reset) mode or in a write mode. Furthermore, at each instant the RB 50 may also operate in read mode, simultaneously or not with the write/initialization mode.

In particular, in the initialization mode each of these memory elements of the registers may be initialized to a predefined and default value (i.e. a reset value, e.g. '0') controlling the input datum MUX 52 in such a way that D=D_INIT (where D_INIT is a K₂-bit datum, wherein each of these bits is stored in a respective memory element of the register and is equal to the reset value, e.g. '0') and simultaneously selecting the initialization mode of the RB 50 (this occurs when WR_EN assumes a first value, e.g. '1') and providing a register address which identifies, from among the registers present in the RB 50, the specific register to be initialized (this occurs when WR_ADDR assumes a value corresponding to the address in the RB 50 of the register to be initialized).

In write mode (optional), each register may be overwritten (e.g., the bit of each memory element of the register may pass from '0' to '1' and vice versa) controlling the input datum MUX 52 in such a way that D=D_SENS or D=D_ALU (depending on whether it is desired to write in the register the datum coming from the LSU 14 or, respectively, from the ALU 32) and simultaneously selecting the write mode of the RB 50 (this occurs when WR_EN assumes the first value, e.g. '1') and providing a register address which identifies, from among the registers present in the RB 50, the specific register to be overwritten (this occurs when WR_ADDR assumes a value corresponding to the address in the RB 50 of the register to be overwritten).

In the read mode (optional), each register may be read (i.e. the bits saved in the memory elements may be provided at output to the RB 50) providing the register addresses which identify, from among the registers present in the RB 50, the specific registers to be read in the read outputs 50f and 50g (this occurs when RD_ADDR_0 and RD_ADDR_1 each assume a value corresponding to the address in the RB 50 of the registers to be read, in such a way as to provide at output as first and, respectively, second read output signal Q_0 and Q_1 the data saved in the respective registers identified by RD_ADDR_0 and RD_ADDR_1).

As evident, the initialization mode and the write mode are similar and differ only for the datum to be written in the register (i.e. the sequence of reset values for the initialization mode and the datum D_SENS or D_ALU for the write mode). In other words, both the initialization mode and the write mode may be considered as comprised in an update mode of the RB 50, identified by WR_EN='1' (common to both the initialization mode and the write mode and identifying the enabling of the update of the RB 50). Consequently, the without-reset memory elements of the RB 50 may be initialized in a manner similar to that commonly used to write therein. This allows the correct functioning of the RB 50 and therefore of the processor 10 without the need to have a reset line for each memory element of the RB 50 (i.e. an additional input for each memory element, configured to receive a reset signal when the memory elements are to be initialized). The update mode of the RB 50 is instead disabled when WR_EN assumes a second value (e.g., WR_EN='0' identifying the disabling of the update of the RB 50); in this case, the RB 50 can neither be initialized nor overwritten.

Figure 3 shows the structure of the RB 50 in greater detail, according to one embodiment.

As already mentioned, the RB 50 comprises K₁ registers, here indicated as a whole with the reference 60. In the embodiment of Figure 3 K₁=4 is exemplarily considered (i.e., a first, a second, a third and a fourth register 60₁-60₄), not to unnecessarily obscure the description and understanding of the RB 50. Nevertheless, a different value of K₁ may be similarly considered (e.g., K₁>4); for example, the RB 50 may comprise 32 registers 60. Furthermore, each register 60 may store a K₂-bit datum and therefore, in the example considered, a 32-bit datum.

In detail, each register 60i (with 1≤i≤4) comprises a respective write datum input 60a, a respective write enable input 60b, a respective clock input 60c and a respective output 60d.

The RB 50 further comprises a decoder (with abbreviation DEC in Figure 3) 62 having an input 62a and K₁ outputs (here called first to fourth output and indicated with the respective references 62b₁-62b₄). In other words, the decoder 62 is of 1:K₁ type and has an output 62bᵢ for each register 60. In detail, the input 62a of the decoder 62 coincides with (i.e. forms and defines) the write address input 50c of the RB 50 and therefore is connected to the CU 20 to receive WR_ADDR.

The RB 50 also comprises K₁ main AND logic gates, indicated as a whole with the reference 64 and with the abbreviation A. In other words, there are present a first to a fourth main AND logic gate 64i (with 1≤i≤4), i.e. one for each register 60.

Each main AND logic gate 64i is of AND type and has a first input 64a, a second input 64b and an output 64c, respectively. In each main AND logic gate 64i, the first input 64a is connected to the i-th output 62bᵢ of the decoder 62, the second input 64b coincides with the write enable input 50b of the RB 50 and therefore is connected to the CU 20 to receive WR_EN and the output 64c is connected to the write enable input 60b of the i-th register 60ᵢ.

In each register 60i (abbreviation REG in Figure 3), the write datum input 60a coincides with the write datum input 50a of the RB 50 and therefore is connected to the input datum MUX 52 to receive 32-bit D. Furthermore, the write enable input 60b is connected to the output 64c of the i-th main AND logic gate 64i and the clock input 60c coincides with the clock input 50h of the RB 50 and therefore is connected to the CG 24 to receive CLK.

The RB 50 further comprises an output MUX for each output of the RB 50. In other words, in the embodiment of Figures 2 and 3, the RB 50 comprises a first output MUX 66₁ (abbreviation M_U1 in Figure 3) and a second output MUX 66₂ (abbreviation M_U2 in Figure 3).

Each output MUX 66 is of K₁:1 type, i.e. comprises respectively K₁ inputs (i.e. one for each register 60, indicated in Figure 3 with the references 66a₁-66a₄) and an output 66b. In detail, each input 66aᵢ of the output MUX 66 considered is connected to the output 60d of the i-th register 60ᵢ, while the output 66b of the j-th output MUX 66ⱼ (with 1≤j≤2) coincides with the j-th read output 50f, 50g of the RB 50 and therefore generates in use Q_0 for the first output MUX 66₁ and Q_1 for the second output MUX 66₂. In the example considered, the inputs 66a₁-66a₄ and the output 66b have 32 bits. Furthermore, each output MUX 66 comprises a respective control input 66c through which the CU 20 controls in use the output MUX 66; in detail, the control input 66c of the first output MUX 66₁ coincides with the first read address input 50d of the RB 50 and therefore is connected to the CU 20 to receive RD_ADDR_0, and the control input 66c of the second output MUX 66₂ coincides with the second read address input 50e of the RB 50 and therefore is connected to the CU 20 to receive RD_ADDR_1.

Figure 4 shows the structure of one of the registers 60 in greater detail.

In particular, each register 60 comprises K₂ memory elements, one for each bit of the datum to be stored in the register 60. The memory elements are indicated as a whole with the reference 70. By way of example and not to excessively obscure the understanding, Figure 4 shows 4 memory elements (i.e., a first to a fourth memory element 70₁-70₄, indicated in Figure 4 respectively with the abbreviations FF0-FF3); nevertheless, the number K₂ may be different from 4 and for example, in the example considered wherein the data in the registers is 32-bit data, K₂=32.

In detail, the memory elements 70 are of without-reset type (i.e. they do not have an initialization input for receiving a reset signal) and may each store a 1-bit information. In fact, the registers 60 of the without-reset type are defined as registers comprising memory elements 70 of without-reset type.

In detail, the memory elements 70 are flip-flops of without-reset type (so-called without-reset flip-flops), for example known without-reset D flip-flops. For illustrative and non-limiting purposes, the book "CMOS VLSI Design: A Circuits and System Perspective" describes, in section 10.3.2, a possible example of without-reset flip-flop (e.g., Figure 10.19); however, other known without-reset flip-flop structures are usable (for example, https://www.rfwireless-world.com/source-code/VERILOG/D-flipflop-without-reset-verilog-code.html).

In greater detail, each memory element 70ₖ (with 1≤k≤4) has a write datum input 70a, an enable input 70b, a clock input 70c and a read output 70d.

In particular, the write datum inputs 70a form the write datum input 60a of the register 60i and are therefore configured to receive D. In greater detail, in use each memory element 70ₖ receives an elementary datum Dₖ of D (i.e. the bit Dₖ of D) in such a way that the succession of K₂ bits of D is stored simultaneously, bit by bit, in the K₂ memory elements 70ₖ, in a per se known manner. Furthermore, the enable inputs 70b form the write enable input 60b of the register 60i and are therefore connected to the main AND logic gate 64ᵢ. The clock inputs 70c form the clock input 60c of the register 60i and are therefore connected to the CG 24. The read outputs 70d form the output of the register 60i and are configured to transmit the information saved in the memory elements 70ₖ. This information output from the register 60i is called hereinbelow output signal (hereinafter also indicated, for the sake of simplicity, OUTᵢ). OUTᵢ has K₂ bits, one for each memory element 70ₖ. In detail, the read output 70d of each memory element 70ₖ generates at output an elementary datum OUT_{i,k} of OUTᵢ (i.e., the bit OUT_{i,k} of OUTᵢ) in such a way that the succession of K₂ bits of OUTᵢ is provided at output from the register 60i simultaneously, bit by bit, by the K₂ memory elements 70ₖ, in a per se known manner.

In use, the CU 20, the input datum MUX 52 and the RB 50 function as now described.

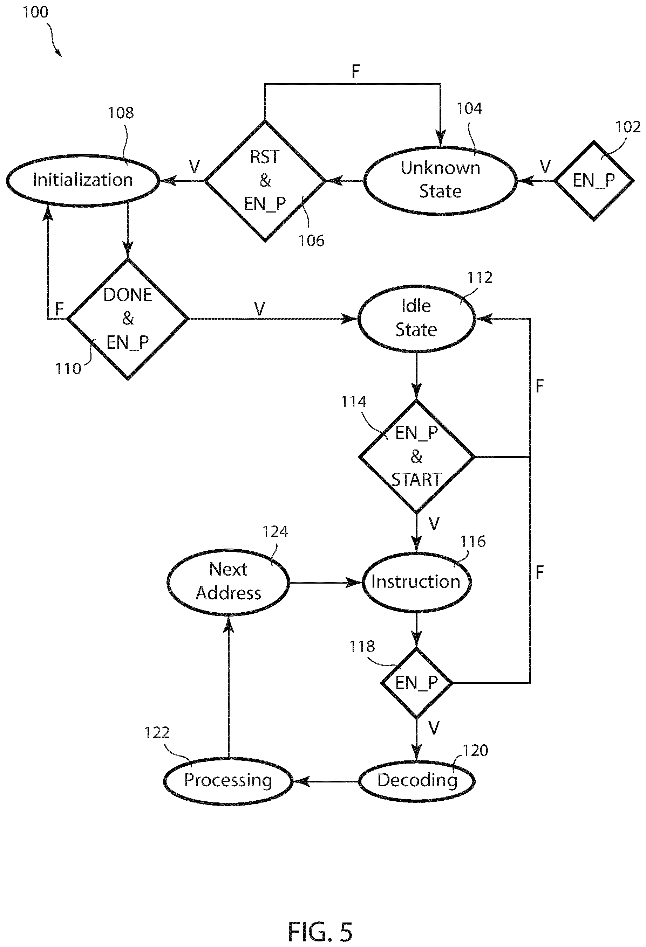

At each clock pulse of CLK, the CU 20 generates SEL, WR_EN, WR_ADDR, RD_ADDR_0 , RD_ADDR_1, Q_0 and Q_1 on the basis of the finite-state machine (FSM) shown in Figure 5 and better described below.

At each clock pulse of CLK, the input datum MUX 52 selects D from among D_SENS, D_INIT and D_ALU on the basis of SEL. For example, if SEL='00' D=D_SENS, if SEL='01' D=D_INIT and if SEL='10' D=D_ALU.

At each clock pulse of CLK, the decoder 62 receives WR_ADDR at input and decodes it, in a per se known manner, to generate at output K₁ address signals ADDRᵢ (i.e. a first to a fourth address signal ADDR₁-ADDR₄), one for each register 60ᵢ. For example, ADDRᵢ has 1 bit like WR_EN. ADDRᵢ assumes a first value (e.g., '0') when WR_ADDR is not indicative of the initialization of the i-th register 60ᵢ, and assumes a second value (e.g., '1') when WR_ADDR is indicative of the initialization of the i-th register 60ᵢ.

For example, when WR_ADDR is indicative of the initialization of the third register 60₃, ADDR₁='0', ADDR₂=' 0', ADDR₃='1', ADDR₄='0'.

Each main AND logic gate 64i receives at input ADDRᵢ and WR_EN and generates at output an enable signal ENᵢ which assumes a first value (e.g., '0') if ADDRᵢ='0' and/or WR_EN='0' and assumes a second value (e.g., '1') if ADDRᵢ='1' and WR_EN='1'. In other words, ENᵢ='1' only if the method is in write/initialization mode (i.e. WR_EN='1') and if the i-th register 60i has been selected for writing/initialization.

Each register 60i receives at input ENᵢ, D and CLK and generates at output OUTᵢ. In detail, each memory element 70ₖ receives at input ENᵢ, Dₖ and CLK and generates at output OUT_{i,k}. In particular, if ENᵢ='1' the register 60i is to be updated at the current clock pulse, therefore each memory element 70ₖ of the register 60i stores Dₖ; if instead ENᵢ='0' the register 60i is not to be updated at the current clock pulse, therefore each memory element 70ₖ of the register 60i keeps in memory the value Dₖ previously stored and does not update it on the basis of the last D received. Furthermore, each memory element 70ₖ of the register 60i generates at output the stored value OUT_{i,k} so that OUTᵢ is generated at output by the register 60ᵢ.

Each output MUX 66ⱼ receives at input RD_ADDR_j and the OUTᵢs of all the registers 60i and generates at output Q_j. In particular, Q_j is equal to the OUTᵢ of the register 60i selected through RD_ADDR_j. For example, if RD_ADDR_j identifies the second register 60₂ and RD_ADDR_j identifies the third register 60₃, Q_0=OUT₂ and Q_1=OUT₃.

Figure 5 shows the implemented FSM in use by the CU 20 to manage the functioning of the processor 10. In particular, the FSM is indicated in Figure 5 with the reference 100 and corresponds to a control method of the processor 10 implemented through the CU 20. In particular, the control method comprises an initialization method of the RB 50, corresponding to the initialization mode previously described.

Initially (passing condition 102), the CU 20 activates upon receiving a processor activation signal (EN_P). For example, EN_P is a fetch enable signal which is absent when the processor 10 is off and may be provided from the outside, for example may be provided manually by an operator who turns on an electronic apparatus which comprises the processor 10.

Upon receiving EN_P, the processor 10 passes to an unknown state 104, by default, and remains there until the CU 20 receives (passing condition 106) a reset signal (RST) in addition to EN_P. RST is provided to the CU 20 when the initialization of the processor 10 and therefore the reset of the RB 50 is requested, so that the processor 10 is ready to operate correctly. Consequently, RST is indicative of an initialization request of the registers 60.

When the CU 20 receives RST, the processor 10 passes to an initialization state 108 wherein the RB 50 is initialized. This state coincides with the initialization mode of the RB 50 and defines the initialization method of the RB 50.

In the initialization state 108, the CU 20 controls the sequential initialization of all registers 60. In other words, the CU 20 generates WR_EN='1' and SEL='10' for K₁ clock pulses (initialization period) and, at each clock pulse, generates the WR_ADDR corresponding to a respective register 60ᵢ. In this manner, at each clock pulse a respective register 60i is initialized to D_INIT and, at the end of the K₁ clock pulses, all registers 60 of RB 50 are initialized.

After the initialization of all registers 60 is completed, the CU generates (passing condition 110) an initialization completed signal (DONE) indicative of the completion of the initialization of the registers 60 of the RB 50.

As long as DONE is not generated, the processor 10 remains in the initialization state 108. Upon generating DONE, the processor 10 passes to an idle state 112 wherein the processor 10 is ready to operate.

The processor 10 remains in the idle state 112 as long as (passing condition 114) the CU 20 receives an operation start signal (START) in addition to EN_P. START is indicative of a start of execution of the operations of the processor 10, i.e. of execution of the instructions present in the instruction register 12.

When the CU 20 receives START, the processor 10 fetches (step 116) an instruction present in the instruction memory 16 and saves it in the instruction register 12, checks (passing condition 118) that EN_P is always present, decodes (step 120) the fetched instruction, processes (step 122) the instruction (i.e. executes it, for example the ALU 32 performs the requested operation established by the instruction), acquires (step 124) the address of the successive instruction to be fetched from the instruction memory 16 and repeats steps 116-124 with the new instruction to be executed. Examples of these instructions to be executed are reading and overwriting one or more registers 60 of the RB 50.

Steps 114-124 are performed in a per se known manner and therefore are not described herein in detail. In general, steps 114-124 define an operation execution state of the processor 10.

The repetition of steps 116-124 allows the instructions present in the instruction register 12 to be executed and therefore allows the task required to the processor 10, previously initialized at step 108, to be completed.

For example, RST, DONE and START are flags that are generated upon reaching the respective conditions. Otherwise, they are signals that assume a first value (e.g., '0') by default and pass to a second value (e.g., '1') upon reaching the respective conditions.

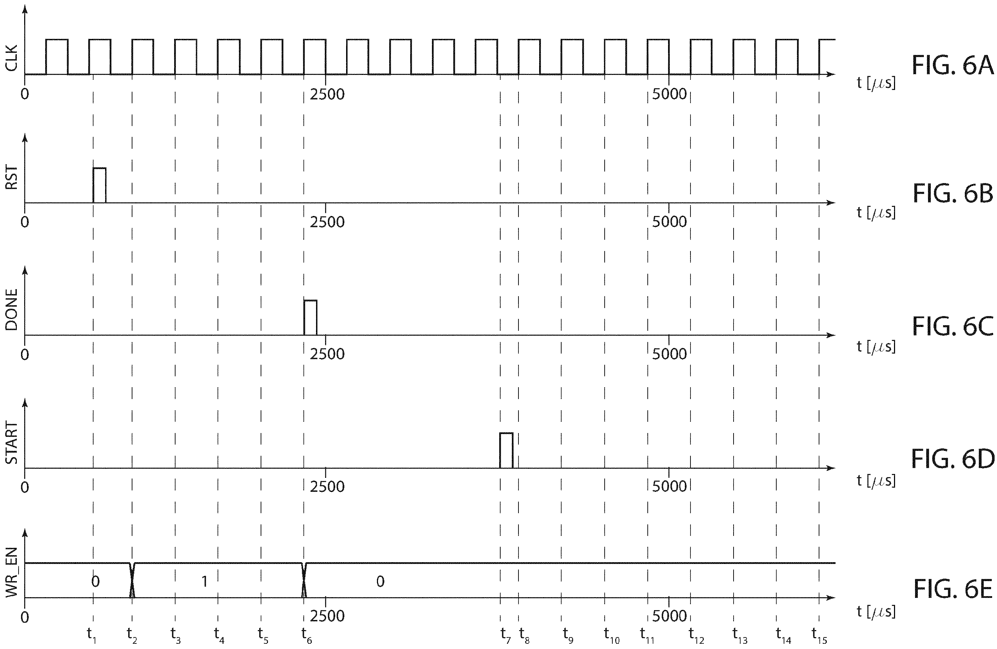

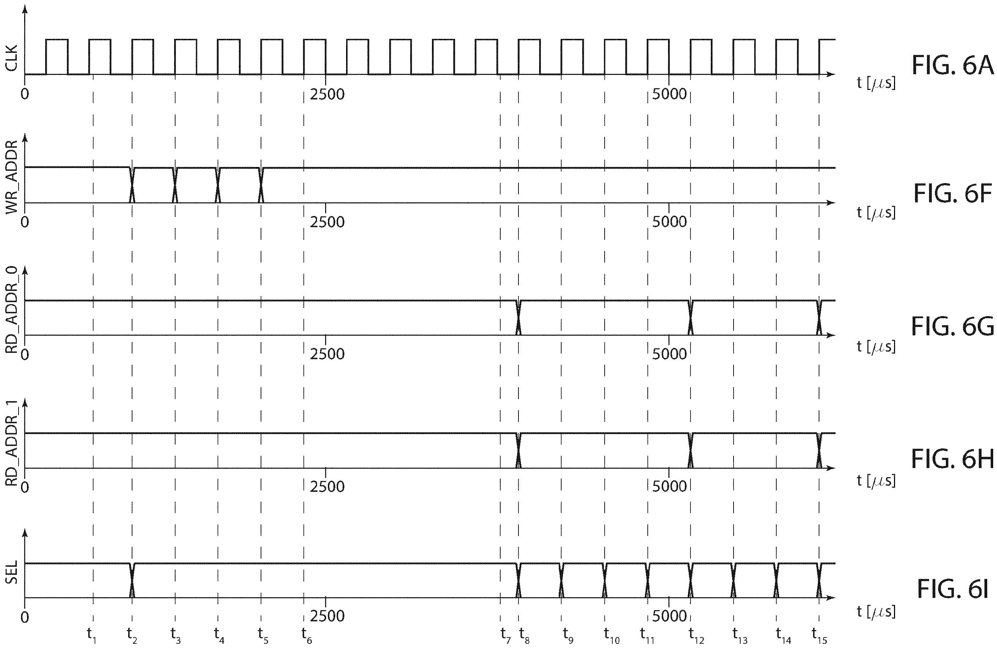

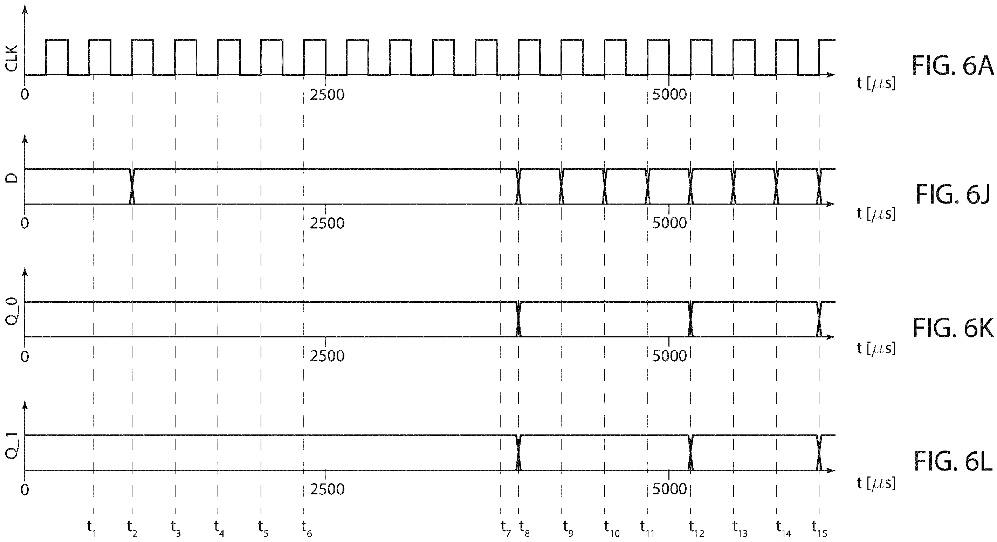

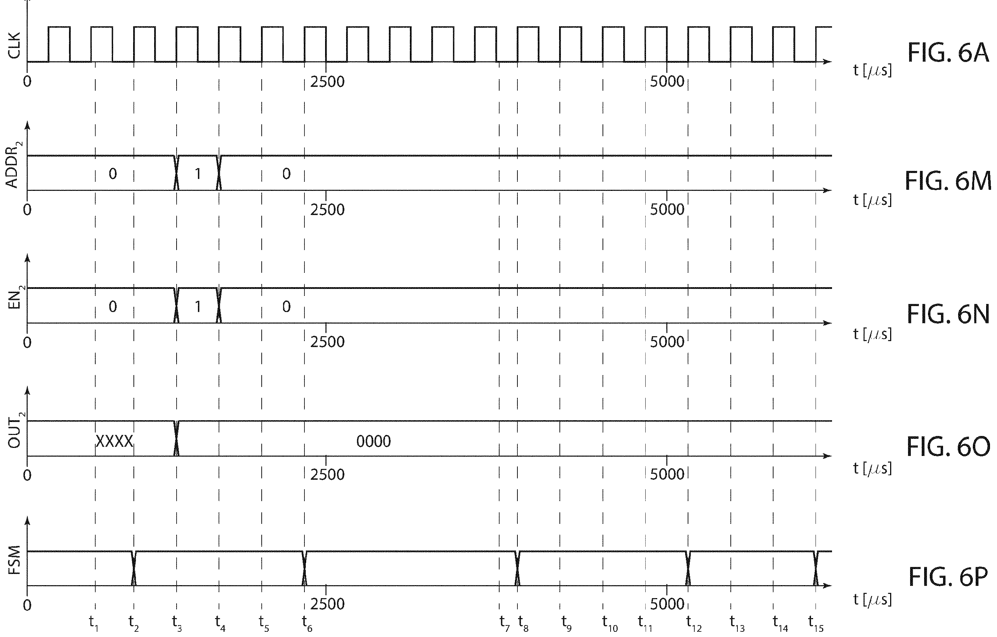

Figures 6A-6P show the waveforms of the previously described signals.

In particular, Figures 6A-6O show respectively: CLK, RST, DONE, START, WR_EN, WR_ADDR, RD_ADDR_0, RD_ADDR_1, SEL, D, Q_0, Q_1, ADDR₂, EN₂, OUT₂. ADDR₂, EN₂, OUT₂ are shown to illustrate the initialization of the second register 60₂ of the RB 50, by way of example and generalizable to any other register 60. Furthermore, Figure 6P shows the alternation of the states of the FSM of Figure 5. By way of example EN_P, which is supposed to be present throughout the duration of the operations of the processor 10 (e.g., EN_P='1' from t₀ onwards), is not shown.

From Figures 6A-6P it may be seen that RST is present at instant t₁.

Up to t₂ (i.e. at the first clock pulse immediately successive to t₁, for example considered on the rising edge of CLK), WR_EN='0' and the FSM is in the unknown state 104.

At t₂ and for the successive K₁ clock pulses, WR_EN passes to '1' (initialization mode), SEL passes from any value to '10' (i.e. D=D_INIT) and WR_ADDR assumes, at each clock pulse, a value indicative of a respective address of the register 60 of the RB 50 to be initialized. In detail, at t₂ WR_ADDR is indicative of the first register 60₁, at t₃ WR_ADDR is indicative of the second register 60₂, at t₄ WR_ADDR is indicative of the third register 60₃, at t₅ WR_ADDR is indicative of the fourth register 60₄. Consequently, in the K₁ clock pulses successive to t₂ (i.e. in t₂≤t≤t₆) the registers 60 are initialized to D_INIT. At t₆ WR_EN returns to '0' and DONE is generated. Consequently, in t₂≤t≤t₂ the FSM is in the initialization state 108.

In particular, referring to the exemplary case of the second register 60₂, ADDR₂ passes from '0' to '1' at t₃ (i.e. at the second clock pulse after t₂) to return then to '0' at t₄, and similar behavior may be seen in EN₂. At t₃ therefore, D_INIT is stored in the second register 60₂ and OUT₂ passes from an undefined value (e.g. XXXX considering a 4-bit register 60) to D_INIT (e.g. 0000 considering a 4-bit register 60).

At t₇ START is received, therefore in t₆≤t≤t₈ (where t₈ is the first clock pulse immediately successive to t₇, for example considered on the rising edge of CLK) the FSM is in the idle state 112.

At t₈ the FSM passes in states 116-124 (one state for each clock pulse successive to t₈). Consequently, the execution of the first instruction lasts from t₈ to t₁₂ and states 116-124 are repeated every 4 clock pulses until the end of the instructions saved in the instruction register 12.

In particular, at t₈ RD_ADD_0 and RD_ADD_1 pass from respective undefined values to values indicating the addresses of the respective registers 60 whose value in Q_0 and Q_1 is desired to be read (which is done at t₈, as may be seen). Furthermore, SEL is generated by the CU 20 at each clock pulse as a function of the current instruction to be executed and, consequently, D varies accordingly.

Consequently, the procedure for initializing the registers 60 performed in t₂≤t≤t₆ generates a latency equal to K₁ clock pulses but allows the registers 60 to be initialized without the need to send the reset signal to each memory element. This allows the correct and normal use of the processor 10 at t≥t₈.

From an examination of the characteristics of the invention made according to the present invention, the advantages that it affords are evident.

In particular, the register bank 50 allows a significant reduction in terms of silicon area necessary for the processor 10, without compromising the performances of the latter. For example, considering a RISCV processor with single-stage ISA RV32I and with H9A-type tech node, with the same performances, the area savings of the present register bank 50 and of the processor 10 thereof are about 10% relative to the case of a known-type register bank, with a decrease of logic gates equal to about 1 Kgate. This entails a substantial saving in terms of area occupation of the register bank 50, overall cost and power consumption of the processor 10. Furthermore, this entails a better reliability of the processor 10 since the risk of congestion of the electrical signals generated by the processor 10 decreases.

These advantages are made possible thanks to the use of memory elements 70 of the registers 60 (in particular, flip-flops) of without-reset type. In fact, considering that normally a with-reset flip-flop comprises 24 transistors while a without-reset one comprises 20 transistors, using without-reset flip-flops allows the area occupation to be reduced by about 16.67% for each flip-flop. Considering then that the register bank 50 generally comprises 32x32 flip-flops, it is understood how the overall reduction of the area occupied by the present register bank 50 relative to a known-type one is significant.

Although the memory elements 70 are without reset, they maintain the possibility of being initialized by the previously described initialization mode, in synchronous logic, unchanged. In other words, the initialization mode allows the registers 60 internal to the register bank to be initialized so that they function correctly when the processor 10 executes the instructions whereto it is appointed.

The initialization procedure is repeated whenever RST is applied to the entire processor 10. Since this rarely occurs during use of the processor 10, the initial latency due to the initialization of the registers 60 is completely negligible with respect to the period in which the processor 10 may operate following the initialization of the registers 60. For example, considering a register bank 50 with 32 registers and a CLK frequency equal to about 10 MHz, the latency for the initialization of the registers 60 is approximately equal to 3.5 µs and the average duration of execution of a program by the processor 10 is about 2 seconds; consequently, the impact of the initialization latency on the average duration of execution of the program is about 10⁻³, i.e. substantially null.

Furthermore, the possibility of initializing the registers 60 in write mode (already provided in common register banks) allows the number of structural and design modifications to be applied to the register bank 50 to be limited, allowing an already present functionality to be used in a new manner.

Finally, it is clear that modifications and variations may be made to the invention described and illustrated herein without thereby departing from the scope of the present invention, as defined in the attached claims. For example, the different embodiments described may be combined with each other so as to provide further solutions.

Furthermore, the input datum MUX 52 may, more generally, choose between D_INIT and at least one further input operating datum (e.g., D_SENS or D_ALU). In other words, the input datum MUX 52 may have two or more inputs (among which the input for D_INIT is present) and may be configured to transmit D_INIT or a further datum at output. For example, the input datum MUX 52 may have M>3 inputs and SEL may assume M values in such a way that the output 52d may generate D_INIT or a different datum chosen from among the M-1 remaining data received at the input of the input datum MUX 52.

The RB 50 may have a different number of outputs, and therefore generate a single read output signal (e.g., Q_0) or more than two read output signals, through a respective number of output MUXs 66.

Furthermore, K₁ and K₂ may be different with respect to what has been previously described and, for example, equal to 32. This may be accomplished through obvious modifications on the basis of what has been previously described. For example, the RB 50 comprises in this case 32 outputs of the decoder 62, 32 main AND logic gates 64, 32 registers 60 (each comprising 32 without-reset flip-flops).

## Claims

1. An electronic processor (10) comprising:
- a register bank (50) comprising a first plurality of registers (60),
wherein the register bank (50) has a write datum input (50a), a write enable input (50b) and a write address input (50c),
wherein the write datum input (50a) is configured to receive an initialization datum (D_INIT) of predefined type, the write enable input (50b) is configured to receive a write enable signal (WR_EN) and the write address input (50c) is configured to receive a write address signal (WR_ADDR),
wherein the register bank (50) is selectively controllable in an initialization mode and in a write mode of at least one register (60) of the first plurality of registers (60),
wherein the register bank (50) is configured to, in the initialization mode of the at least one register (60) of the first plurality of registers (60):
- receive, in the initialization mode, the initialization datum (D_INIT);
- receive, in the initialization mode, the write enable signal (WR_EN) identifying the enabling of the update of the at least one register (60) to be initialized;
- receive, in the initialization mode, the write address signal (WR_ADDR) identifying an address of the at least one register (60) to be initialized; and
- in response to receiving the write enable signal (WR_EN), store the initialization datum (D_INIT) in the at least one register (60) to be initialized,
the electronic processor (10) further comprising:
- a control unit (20) configured to generate a control signal (SEL), the write enable signal (WR_EN) and the write address signal (WR_ADDR);
- an input datum multiplexer (52), which has at least a first input (52a), a second input (52b), a control input (52e) and an output (52d), the first input (52a) being configured to receive an operating datum (D_SENS; D_ALU), the second input (52b) being configured to acquire the initialization datum (D_INIT), the control input (52e) being connected to the control unit (20) and being configured to receive, from the control unit (20), the control signal (SEL), the input datum multiplexer (52) being configured to transmit to the output (52d) the operating datum (D_SENS; D_ALU) or the initialization datum (D_INIT), on the basis of the control signal (SEL),
wherein the write datum input (50a) is connected to the output (52d) of the input datum multiplexer (52) and wherein the write enable input (50b) and the write address input (50c) are connected to the control unit (20),
wherein the write datum input (50a) is configured to receive from the input datum multiplexer (52) the operating datum (D_SENS; D_ALU) and the initialization datum (D_INIT), the write enable input (50b) is configured to receive from the control unit (20) the write enable signal (WR_EN) and the write address input (50c) is configured to receive from the control unit (20) the write address signal (WR_ADDR), wherein, in the initialization mode of the at least one register (60) of the first plurality of registers (60), the control unit (20) is configured to:
- set, in the initialization mode, the control signal (SEL) in such a way that the input datum multiplexer (52) transmits to the output (52d) the initialization datum (D_INIT);
- set, in the initialization mode, the write enable signal (WR_EN) to a value identifying the enabling of the update of the at least one register (60) to be initialized; and
- set, in the initialization mode, the write address signal (WR_ADDR) to a value identifying the address of the at least one register (60) to be initialized.

2. The electronic processor according to claim 1, wherein the write datum input (50a) is further configured to receive the operating datum (D_SENS; D_ALU),
wherein the register bank (50) is configured to, in a write mode of at least one register (60) of the first plurality of registers (60):
- receive, in the write mode, the operating datum (D_SENS; D_ALU);
- receive, in the write mode, the write enable signal (WR_EN) identifying the enabling of the update of the at least one register (60) to be overwritten;
- receive, in the write mode, the write address signal (WR_ADDR) identifying the address of the at least one register (60) to be overwritten; and
- in response to receiving the write enable signal (WR_EN), store the operating datum (D_SENS; D_ALU) in the at least one register (60) to be overwritten.

3. The electronic processor according to claim 1 or 2, further having at least one first read address input (50d) and at least one first read output (50f),
wherein the first read address input (50d) is configured to receive a first read address signal (RD_ADDR_0) and the first read output (50f) is configured to generate a first read output signal (Q_0),
wherein the register bank (50) is configured to, in a read mode of at least one register (60) of the first plurality of registers (60):
- receive, in the read mode, the first read address signal (RD_ADDR_0) identifying the address of the at least one register (60) to be read; and
- generate, in the read mode, the first read output signal (Q_0) which corresponds to the datum stored in the at least one register (60) to be read.

4. The electronic processor according to any of the preceding claims, wherein, in the initialization mode, the register bank (50) is configured to initialize the registers (60) of the first plurality of registers (60) in succession to each other.

5. The electronic processor according to any of the preceding claims, wherein each register (60) of the first plurality of registers (60) has a respective write datum input (60a) and a respective write enable input (60b),
wherein the write datum input (60a) of each register (60i) forms the write datum input (50a) of the register bank (50),
wherein the register bank (50) further comprises:
- a decoder (62) having an input (62a) and having a respective output (62bᵢ) for each register (60), the input (62a) of the decoder (62) forming the write address input (50c) of the register bank (50) and being configured to receive the write address signal (WR_ADDR); and
- a respective main AND logic gate (64) for each register (60), each main AND logic gate (64) being of AND type and respectively having a first input (64a), a second input (64b) and an output (64c), wherein the first input (64a) of each main AND logic gate (64i) is connected to a respective output (62bᵢ) of the decoder (62), the second input (64b) of each main AND logic gate (64i) forms the write enable input (50b) of the register bank (50) and is configured to receive the write enable signal (WR_EN) and the output (64c) of each main AND logic gate (64ᵢ) is connected to the write enable input (60b) of a respective register (60ᵢ) of the registers (60).

6. The electronic processor (10) according to anyone of the previous claims, further comprising:
- an instruction register (12) which comprises a multiplicity of memory registers and is configured to store one or more instructions to be executed by the processor (10);
- a load-and-store unit (14), which comprises a respective multiplicity of further memory registers and is configured to store data usable by the processor (10); and
- an arithmetic-logic unit (32),
wherein the input datum multiplexer (52) further has a third input (52c),
wherein the first input (52a) is connected to the load-and-store unit (14) to receive the operating datum corresponding to a sensor datum (D_SENS) stored in the load-and-store unit (14), the second input (52b) is connected to a reference node (GND) of the electronic processor (10) to acquire the initialization datum (D_INIT), the third input (52c) is connected to the arithmetic-logic unit (32) to receive an ALU datum (D_ALU) generated by the arithmetic-logic unit (32),
wherein the input datum multiplexer (52) is configured to transmit to the output (52d) one of the sensor datum (D_SENS), the ALU datum (D_ALU) and the initialization datum (D_INIT), on the basis of the control signal (SEL).

7. An initialization method of a register bank (50) of a electronic processor (10) according to any of claims 1-6,
the initialization method comprising, in the initialization mode of the at least one register (60) of the first plurality of registers (60), the steps of:
a. setting, by the control unit (20) and in the initialization mode, the control signal (SEL) in such a way that the input datum multiplexer (52) transmits to the output (52d) the initialization datum (D_INIT);
b. setting, by the control unit (20) and in the initialization mode, the write enable signal (WR_EN) to a value identifying the enabling of the update of the at least one register (60) to be initialized;
c. setting, by the control unit (20) and in the initialization mode, the write address signal (WR_ADDR) to a value identifying the address of the at least one register (60) to be initialized;
d. receiving, in the initialization mode and by the register bank (50), the initialization datum (D_INIT);
e. receiving, in the initialization mode and by the register bank (50), the write enable signal (WR_EN) identifying the enabling of the update of the at least one register (60) to be initialized;
f. receiving, in the initialization mode and by the register bank (50), the write address signal (WR_ADDR) identifying an address of the at least one register (60) to be initialized; and
g. in response to receiving the write enable signal (WR_EN), storing, by the register bank (50), the initialization datum (D_INIT) in the at least one register (60) to be initialized.

8. The initialization method according to claim 7, comprising performing steps c-g for each register (60) of the first plurality of registers (60) of the register bank (50) .

9. The initialization method according to claim 7 or 8, wherein each register (60) comprises a second plurality of memory elements (70), and
wherein the initialization datum (D_INIT) is formed by a number of bits equal to said second plurality, each bit of the initialization datum (D_INIT) being equal to an initialization value ('0').

10. A control method (100) of an electronic processor (10) according to any of claims 1-6,
the control method (100) comprising the steps of:
- controlling the electronic processor (10) in a default unknown state (104) up to receiving by the control unit (20) a reset signal (RST) indicative of an initialization request of the registers (60) of the register bank (50);
- in response (106) to receiving by the control unit (20) the reset signal (RST) and until (110) an initialization completed signal (DONE) is generated by the control unit (20), indicative of the completion of the initialization of the registers (60) of the register bank (50), initializing the registers (60) of the register bank (50) through an initialization method according to any of claims 7-9;
- in response (110) to generating by the control unit (20) the initialization completed signal (DONE) and until (114) an operation start signal (START) is received by the electronic processor (10), indicative of instruction execution start, controlling the processor (10) in an idle state (112); and
- in response (114) to receiving by the control unit (20) the operation start signal (START), controlling the processor (10) into an operation execution state (116-124).

11. The control method (100) according to claim 10, wherein the step of controlling the processor (10) in the operation execution state (116-124) comprises, in the write mode of at least one register (60) of the first plurality of registers (60):
- receiving, in the write mode and through the register bank (50), the operating datum (D_SENS; D_ALU);
- receiving, in the write mode and through the register bank (50), the write enable signal (WR_EN) identifying the enabling of the update of the at least one register (60) to be overwritten;
- receiving, in the write mode and through the register bank (50), the write address signal (WR_ADDR) identifying the address of the at least one register (60) to be overwritten; and
- in response to receiving the write enable signal (WR_EN), storing, through the register bank (50), the operating datum (D_SENS; D_ALU) in the at least one register (60) to be overwritten.

12. A computer program product comprising instructions which, when the program is executed by the electronic processor (10) according to any of claims 1-6, cause the processor to carry out an initialization method of a register bank (50) of the electronic processor (10), according to any of claims 7-9, or a control method of the electronic processor (10), according to any of claims 10-11.

## Patentansprüche

1. Elektronischer Prozessor (10), umfassend:
- eine Registerbank (50), die eine erste Vielzahl von Registern (60) umfasst,
wobei die Registerbank (50) einen Schreibdatumseingang (50a), einen Schreibfreigabeeingang (50b) und einen Schreibadresseneingang (50c) aufweist,
wobei der Schreibdatumseingang (50a) so konfiguriert ist, dass er ein Initialisierungsdatum (D_INIT) von vordefiniertem Typ empfängt, der Schreibfreigabeeingang (50b) so konfiguriert ist, dass er ein Schreibfreigabesignal (WR_EN) empfängt, und der Schreibadresseneingang (50c) so konfiguriert ist, dass er ein Schreibadressensignal (WR_ADDR) empfängt,
wobei die Registerbank (50) in einem Initialisierungsmodus und in einem Schreibmodus von mindestens einem Register (60) der ersten Vielzahl von Registern (60) selektiv steuerbar ist,
wobei die Registerbank (50) so konfiguriert ist, dass sie im Initialisierungsmodus des mindestens einen Registers (60) der ersten Vielzahl von Registern (60):
- im Initialisierungsmodus das Initialisierungsdatum (D_INIT) empfängt;
- im Initialisierungsmodus das Schreibfreigabesignal (WR_EN) empfängt, das die Freigabe des Aktualisierens des mindestens einen zu initialisierenden Registers (60) identifiziert;
- im Initialisierungsmodus das Schreibadressensignal (WR_ADDR) empfängt, das eine Adresse des mindestens einen zu initialisierenden Registers (60) identifiziert; und
- als Reaktion auf das Empfangen des Schreibfreigabesignals (WR_EN) das Initialisierungsdatum (D_INIT) in dem mindestens einen zu initialisierenden Register (60) speichert,
wobei der elektronische Prozessor (10) ferner Folgendes umfasst:
- eine Steuereinheit (20), die so eingerichtet ist, dass sie ein Steuersignal (SEL), das Schreibfreigabesignal (WR_EN) und das Schreibadressensignal (WR_ADDR) erzeugt;
- einen Eingangsdatumsmultiplexer (52), der mindestens einen ersten Eingang (52a), einen zweiten Eingang (52b), einen Steuereingang (52e) und einen Ausgang (52d) aufweist, wobei der erste Eingang (52a) zum Empfangen eines Betriebsdatums (D_SENS; D_ALU) konfiguriert ist, wobei der zweite Eingang (52b) so konfiguriert ist, dass er das Initialisierungsdatum (D_INIT) erfasst, wobei der Steuereingang (52e) mit der Steuereinheit (20) verbunden ist und so eingerichtet ist, dass er von der Steuereinheit (20) das Steuersignal (SEL) empfängt, wobei der Eingangsdatumsmultiplexer (52) so eingerichtet ist, dass er an den Ausgang (52d) das Betriebsdatum (D_SENS; D_ALU) oder das Initialisierungsdatum (D_INIT) basierend auf dem Steuersignal (SEL) sendet,
wobei der Schreibdatumseingang (50a) mit dem Ausgang (52d) des Eingangsdatumsmultiplexers (52) verbunden ist und wobei der Schreibfreigabeeingang (50b) und der Schreibadresseneingang (50c) mit der Steuereinheit (20) verbunden sind,
wobei der Schreibdatumseingang (50a) so konfiguriert ist, dass er von dem Eingangsdatumsmultiplexer (52) das Betriebsdatum (D_SENS; D_ALU) und das Initialisierungsdatum (D_INIT) empfängt, der Schreibfreigabeeingang (50b) so konfiguriert ist, dass er von der Steuereinheit (20) das Schreibfreigabesignal (WR_EN) empfängt, und der Schreibadresseneingang (50c) so konfiguriert ist, dass er von der Steuereinheit (20) das Schreibadressensignal (WR_ADDR) empfängt, wobei die Steuereinheit (20) in dem Initialisierungsmodus des mindestens einen Registers (60) der ersten Vielzahl von Registern (60) zu Folgendem konfiguriert ist:
- Einstellen des Steuersignals (SEL) im Initialisierungsmodus in der Weise, dass der Eingangsdatumsmultiplexer (52) das Initialisierungsdatum (D_INIT) an den Ausgang (52d) sendet;
- Einstellen des Schreibfreigabesignals (WR_EN) im Initialisierungsmodus auf einen Wert, der die Freigabe der Aktualisierung des mindestens einen zu initialisierenden Registers (60) identifiziert; und
- Einstellen des Schreibadressensignals (WR_ADDR) im Initialisierungsmodus auf einen Wert, der die Adresse des mindestens einen zu initialisierenden Registers (60) identifiziert.

2. Elektronischer Prozessor nach Anspruch 1, wobei der Schreibdatumseingang (50a) ferner so konfiguriert ist, dass er das Betriebsdatum (D_SENS; D_ALU) empfängt,
wobei die Registerbank (50) so konfiguriert ist, dass sie in einem
Schreibmodus von mindestens einem Register (60) der ersten Vielzahl von Registern (60):
- im Schreibmodus das Betriebsdatum (D_SENS; D_ALU) empfängt;
- im Schreibmodus das Schreibfreigabesignal (WR_EN) empfängt, das die Freigabe der Aktualisierung des mindestens einen zu überschreibenden Registers (60) identifiziert;
- im Schreibmodus das Schreibadressensignal (WR_ADDR) empfängt, das die Adresse des mindestens einen zu überschreibenden Registers (60) identifiziert; und
- als Reaktion auf das Empfangen des Schreibfreigabesignals (WR_EN), das Betriebsdatum (D_SENS; D_ALU) in dem mindestens einen zu überschreibenden Register (60) ablegt.

3. Elektronischer Prozessor nach Anspruch 1 oder 2, der ferner mindestens einen ersten Leseadresseneingang (50d) und mindestens einen ersten Leseausgang (50f) aufweist, wobei der erste Leseadresseneingang (50d) so konfiguriert ist, dass er ein erstes Leseadressensignal (RD_ADDR_0) empfängt, und der erste Leseausgang (50f) so konfiguriert ist, dass er ein erstes Leseausgangssignal (Q_0) erzeugt, wobei die Registerbank (50) so konfiguriert ist, dass sie in einem Lesemodus von mindestens einem Register (60) der ersten Vielzahl von Registern (60):
- im Lesemodus das erste gelesene Adressensignal (RD_ADDR_0) empfängt, das die Adresse des mindestens einen zu lesenden Registers (60) identifiziert; und
- im Lesemodus das erste gelesene Ausgangssignal (Q) erzeugt, das dem in dem mindestens einen zu lesenden Register (60) gespeicherten Datum entspricht.

4. Elektronischer Prozessor nach einem der vorhergehenden Ansprüche, wobei im Initialisierungsmodus die Registerbank (50) so konfiguriert ist, dass sie die Register (60) der ersten Vielzahl von Registern (60) nacheinander initialisiert.

5. Elektronischer Prozessor nach einem der vorhergehenden Ansprüche, wobei jedes Register (60) der ersten Vielzahl von Registern (60) einen jeweiligen Schreibdatumseingang (60a) und einen jeweiligen Schreibfreigabeeingang (60b) aufweist,
wobei der Schreibdatumseingang (60a) jedes Registers (60ᵢ) den Schreibdatumseingang (50a) der Registerbank (50) bildet,
wobei die Registerbank (50) ferner Folgendes umfasst:
- einen Decoder (62) mit einem Eingang (62a) und einem jeweiligen Ausgang (62bᵢ) für jedes Register (60), wobei der Eingang (62a) des Decoders (62) den Schreibadresseneingang (50c) der Registerbank (50) bildet und so konfiguriert ist, dass er das Schreibadressensignal (WR_ADDR) empfängt; und
- ein jeweiliges Haupt-UND-Logikgatter (64) für jedes Register (60), wobei jedes Haupt-UND-Logikgatter (64) vom UND-Typ ist und jeweils einen ersten Eingang (64a), einen zweiten Eingang (64b) und einen Ausgang (64c) aufweist, wobei der erste Eingang (64a) jedes Haupt-UND-Logikgatters (64ᵢ) mit einem jeweiligen Ausgang (62bᵢ) des Decoders (62) verbunden ist, wobei der zweite Eingang (64b) jedes Haupt-UND-Logikgatters (64ᵢ) den Schreibfreigabeeingang (50b) der Registerbank (50) bildet und so eingerichtet ist, dass er das Schreibfreigabesignal (WR_EN) empfängt, und der Ausgang (64c) jedes Haupt-UND-Logikgatters (64ᵢ ) mit dem Schreibfreigabeeingang (60b) eines jeweiligen Registers (60ᵢ) der Register (60) verbunden ist.

6. Elektronischer Prozessor (10) nach einem der vorhergehenden Ansprüche, ferner umfassend:
- ein Anweisungsregister (12), das eine Vielzahl von Speicherregistern umfasst und so eingerichtet ist, dass es eine oder mehrere von dem Prozessor (10) auszuführende Anweisungen speichert;
- eine Lade- und Speichereinheit (14), die eine jeweilige Vielfalt weiterer Speicherregister umfasst und zum Speichern von vom Prozessor (10) nutzbaren Daten eingerichtet ist; und
- eine arithmetische Logikeinheit (32),
wobei der Eingangsdatumsmultiplexer (52) ferner einen dritten Eingang (52c) aufweist,
wobei der erste Eingang (52a) mit der Lade- und Speichereinheit (14) verbunden ist, um das Betriebsdatum zu empfangen, das einem in der Lade- und Speichereinheit (14) gespeicherten Sensordatum (D_SENS) entspricht, der zweite Eingang (52b) mit einem Referenzknoten (GND) des elektronischen Prozessors (10) verbunden ist, um das Initialisierungsdatum (D_INIT) zu erfassen, der dritte Eingang (52c) mit der Arithmetik-Logikeinheit (32) verbunden ist, um ein von der Arithmetik-Logikeinheit (32) erzeugtes ALU-Datum (D_ALU) zu empfangen,
wobei der Eingangsdatumsmultiplexer (52) so eingerichtet ist, dass er anhand des Steuersignals (SEL) eines des Sensordatums (D_SENS), des ALU-Datums (D_ALU) und des Initialisierungsdatums (D_INIT) an den Ausgang (52d) sendet.

7. Initialisierungsverfahren einer Registerbank (50) eines elektronischen Prozessors (10) nach einem der Ansprüche 1 bis 6, wobei das Initialisierungsverfahren im Initialisierungsmodus des mindestens einen Registers (60) der ersten Vielzahl von Registern (60) folgende Schritte umfasst:
a. Einstellen, durch die Steuereinheit (20) und im Initialisierungsmodus, des Steuersignals (SEL) in der Weise, dass der Eingangsdatumsmultiplexer (52) an den Ausgang (52d) das Initialisierungsdatum (D_INIT) sendet;
b. Einstellen des Schreibfreigabesignals (WR_EN) durch die Steuereinheit (20) und im Initialisierungsmodus auf einen Wert, der die Freigabe des Aktualisierens des mindestens einen zu initialisierenden Registers (60) identifiziert;
c. Einstellen, durch die Steuereinheit (20) und im Initialisierungsmodus, des Schreibadressensignals (WR_ADDR) auf einen Wert, der die Adresse des mindestens einen zu initialisierenden Registers (60) identifiziert;
d. Empfangen, im Initialisierungsmodus und durch die Registerbank (50), des Initialisierungsdatums (D_INIT);
e. Empfangen, im Initialisierungsmodus und durch die Registerbank (50), des Schreibfreigabesignals (WR_EN), das die Freigabe der Aktualisierung des mindestens einen zu initialisierenden Registers (60) identifiziert;
f. Empfangen, im Initialisierungsmodus und durch die Registerbank (50), des Schreibadressensignals (WR_ADDR), das eine Adresse des mindestens einen zu initialisierenden Registers (60) identifiziert; und
g. als Reaktion auf das Empfangen des Schreibfreigabesignals (WR_EN) das Speichern des Initialisierungsdatums (D_INIT) in dem mindestens einen zu initialisierenden Register (60) durch die Registerbank (50).

8. Initialisierungsverfahren nach Anspruch 7, umfassend die Durchführung der Schritte c bis g für jedes Register (60) der ersten Vielzahl von Registern (60) der Registerbank (50).

9. Initialisierungsverfahren nach Anspruch 7 oder 8, wobei jedes Register (60) eine zweite Vielzahl von Speicherelementen (70) umfasst, und
wobei das Initialisierungsdatum (D_INIT) durch eine Anzahl von Bits gebildet ist, die der zweiten Vielzahl entspricht, wobei jedes Bit des Initialisierungsdatums (D_INIT) gleich einem Initialisierungswert ('0') ist.

10. Steuerverfahren (100) eines elektronischen Prozessors (10) nach einem der Ansprüche 1 bis 6,
wobei das Steuerverfahren (100) die folgenden Schritte umfasst:
- Steuern des elektronischen Prozessors (10) in einem standardmäßig unbekannten Zustand (104), bis die Steuereinheit (20) ein Reset-Signal (RST) empfängt, das auf eine Initialisierungsanforderung der Register (60) der Registerbank (50) hinweist;
- als Reaktion (106) auf das Empfangen des Reset-Signals (RST) durch die Steuereinheit (20) und bis (110) ein Initialisierungsabschlusssignal (DONE) von der Steuereinheit (20) erzeugt wird, das auf den Abschluss der Initialisierung der Register (60) der Registerbank (50) hinweist, Initialisieren des Registers (60) der Registerbank (50) durch ein Initialisierungsverfahren nach einem der Ansprüche 7 bis 9;
- als Reaktion (110) auf das Erzeugen des Initialisierungabgeschlusssignals (DONE) durch die Steuereinheit (20) und bis (114) ein Betriebsstartsignal (START) vom elektronischen Prozessor (10) empfangen wird, das auf den Beginn der Anweisungsausführung hinweist, Steuern des Prozessors (10) in einen Ruhezustand (112); und
- als Reaktion (114) auf das Empfangen des Betriebsstartsignals (START) durch die Steuereinheit (20), Steuern des Prozessors (10) in einen Betriebsausführungszustand (116 bis 124).

11. Steuerverfahren (100) nach Anspruch 10,
wobei der Schritt des Steuerns des Prozessors (10) im Betriebsausführungszustand (116 bis 124) im Schreibmodus von mindestens einem Register (60) der ersten Vielzahl von Registern (60) Folgendes umfasst:
- Empfangen, im Schreibmodus und über die Registerbank (50), des Betriebsdatums (D_SENS; D_ALU);
- Empfangen, im Schreibmodus und über die Registerbank (50), des Schreibfreigabesignals (WR_EN), das die Freigabe der Aktualisierung des mindestens einen zu überschreibenden Registers (60) identifiziert;
- Empfangen, in dem Schreibmodus und über die Registerbank (50), des Schreibadressensignals (WR_ADDR), das die Adresse des mindestens einen zu überschreibenden Registers (60) identifiziert; und
- als Reaktion auf das Empfangen des Schreibfreigabesignals (WR_EN) das Speichern, über die Registerbank (50), des Betriebsdatums (D_SENS; D_ALU) in dem mindestens einen zu überschreibenden Register (60).

12. Computerprogrammprodukt, das Anweisungen umfasst, die, wenn das Programm von dem elektronischen Prozessor (10) nach einem der Ansprüche 1 bis 6 ausgeführt wird, den Prozessor dazu veranlassen, ein Initialisierungsverfahren einer Registerbank (50) des elektronischen Prozessors (10) nach einem der Ansprüche 7 bis 9 oder ein Steuerverfahren des elektronischen Prozessors (10) nach einem der Ansprüche 10 bis 11 durchzuführen.

## Revendications

1. Processeur (10) électronique comprenant :
- un banc de registres (50) comprenant une première pluralité de registres (60),
dans lequel le banc de registres (50) a une entrée de donnée d'écriture (50a), une entrée d'autorisation d'écriture (50b) et une entrée d'adresse d'écriture (50c), dans lequel l'entrée de donnée d'écriture (50a) est configurée pour recevoir une donnée d'initialisation (D_INIT) d'un type prédéfini, l'entrée d'autorisation d'écriture (50b) est configurée pour recevoir un signal d'autorisation d'écriture (WR_EN) et l'entrée d'adresse d'écriture (50c) est configurée pour recevoir un signal d'adresse d'écriture (WR_ADDR),
dans lequel le banc de registres (50) peut être commandé sélectivement en mode d'initialisation et en mode d'écriture d'au moins un registre (60) de la première pluralité de registres (60),
dans lequel le banc de registres (50) est configuré pour, dans le mode d'initialisation de l'au moins un registre (60) de la première pluralité de registres (60) :
- recevoir, en mode d'initialisation, la donnée d'initialisation (D_INIT) ;
- recevoir, en mode d'initialisation, le signal d'autorisation d'écriture (WR_EN) identifiant l'autorisation de la mise à jour de l'au moins un registre (60) à initialiser ;
- recevoir, dans le mode d'initialisation, le signal d'adresse
d'écriture (WR_ADDR) identifiant une adresse de l'au moins un registre (60) à initialiser ; et
- en réponse à la réception du signal d'autorisation d'écriture (WR_EN), stocker la donnée d'initialisation (D_INIT) dans l'au moins un registre (60) à initialiser, le processeur (10) électronique comprenant en outre :
- une unité de commande (20) configurée pour générer un signal de commande (SEL), le signal d'autorisation d'écriture (WR_EN) et le signal d'adresse d'écriture (WR_ADDR) ;
- un multiplexeur de donnée d'entrée (52), qui a au moins une première entrée (52a), une deuxième entrée (52b), une entrée de commande (52e) et une sortie (52d), la première entrée (52a) étant configurée pour recevoir une donnée (D_SENS ; D_ALU) de fonctionnement, la deuxième entrée (52b) étant configurée pour acquérir la donnée d'initialisation (D_INIT), l'entrée de commande (52e) étant connectée à l'unité de commande (20) et étant configurée pour recevoir, à partir de l'unité de commande (20), le signal de commande (SEL), le multiplexeur de donnée d'entrée (52) étant configuré pour transmettre à la sortie (52d) la donnée (D_SENS ; D_ALU) de fonctionnement ou la donnée d'initialisation (D_INIT), sur la base du signal de commande (SEL),
dans lequel l'entrée de donnée d'écriture (50a) est connectée à la sortie (52d) du multiplexeur de donnée d'entrée (52) et dans lequel l'entrée d'autorisation d'écriture (50b) et l'entrée d'adresse d'écriture (50c) sont connectées à l'unité de commande (20),
dans lequel l'entrée de donnée d'écriture (50a) est configurée pour recevoir à partir du multiplexeur de donnée d'entrée (52) la donnée (D_SENS ; D_ALU) de fonctionnement et la donnée d'initialisation (D_INIT), l'entrée d'autorisation d'écriture (50b) est configurée pour recevoir à partir de l'unité de commande (20) le signal d'autorisation d'écriture (WR_EN) et l'entrée d'adresse d'écriture (50c) est configurée pour recevoir à partir de l'unité de commande (20) le signal d'adresse d'écriture (WR_ADDR), dans lequel, en mode d'initialisation de l'au moins un registre (60) de la première pluralité de registres (60), l'unité de commande (20) est configurée pour :
- régler, en mode d'initialisation, le signal de commande (SEL) de sorte que le multiplexeur de donnée d'entrée (52) transmette à la sortie (52d) la donnée d'initialisation (D_INIT) ;
- régler, en mode d'initialisation, le signal d'autorisation d'écriture (WR_EN) sur une valeur identifiant l'autorisation de la mise à jour de l'au moins un registre (60) à initialiser ; et
- régler, en mode d'initialisation, le signal d'adresse d'écriture (WR_ADDR) sur une valeur identifiant l'adresse de l'au moins un registre (60) à initialiser.

2. Processeur électronique selon la revendication 1, dans lequel l'entrée de donnée d'écriture (50a) est en outre configurée pour recevoir la donnée (D_SENS ; D_ALU) de fonctionnement,
dans lequel le banc de registres (50) est configuré pour, dans un
mode d'écriture d'au moins un registre (60) de la première pluralité de registres (60) :
- recevoir, dans le mode d'écriture, la donnée (D_SENS ; D_ALU) de fonctionnement ;
- recevoir, dans le mode d'écriture, le signal d'autorisation d'écriture (WR_EN) identifiant l'autorisation de la mise à jour de l'au moins un registre (60) à écraser ;
- recevoir, en mode d'écriture, le signal d'adresse d'écriture (WR_ADDR) identifiant l'adresse de l'au moins un registre (60) à écraser ; et
- en réponse à la réception du signal d'autorisation d'écriture (WR_EN), stocker la donnée (D_SENS ; D_ALU) de fonctionnement dans l'au moins un registre (60) à écraser.

3. Processeur électronique selon la revendication 1 ou 2, ayant en outre au moins une première entrée d'adresse de lecture (50d) et au moins une première sortie de lecture (50f),
dans lequel la première entrée d'adresse de lecture (50d) est configurée pour recevoir un premier signal d'adresse de lecture (RD_ADDR_0) et la première sortie de lecture (50f) est configurée pour générer un premier signal de sortie de lecture (Q_0),
dans lequel le banc de registres (50) est configuré pour, dans un mode de lecture d'au moins un registre (60) de la première pluralité de registres (60) :
- recevoir, en mode de lecture, le premier signal d'adresse de lecture (RD_ADDR_0) identifiant l'adresse de l'au moins un registre (60) à lire ; et
- générer, en mode de lecture, le premier signal de sortie de lecture (Q_0) qui correspond à la donnée stockée dans l'au moins un registre (60) à lire.

4. Processeur électronique selon l'une quelconque des revendications précédentes, dans lequel, en mode d'initialisation, le banc de registres (50) est configuré pour initialiser les registres (60) de la première pluralité de registres (60) l'un après l'autre.

5. Processeur électronique selon l'une quelconque des revendications précédentes, dans lequel chaque registre (60) de la première pluralité de registres (60) a une entrée de donnée d'écriture (60a) respective et une entrée d'autorisation d'écriture (60b) respective,
dans lequel l'entrée de donnée d'écriture (60a) de chaque registre (60ᵢ) forme l'entrée de donnée d'écriture (50a) du banc de registres (50),
dans lequel le banc de registres (50) comprend en outre :
- un décodeur (62) ayant une entrée (62a) et ayant une sortie (62bᵢ) respective pour chaque registre (60), l'entrée (62a) du décodeur (62) formant l'entrée d'adresse d'écriture (50c) du banc de registres (50) et étant configurée pour recevoir le signal d'adresse d'écriture (WR_ADDR) ; et
- une porte logique ET principale (64) respective pour chaque registre (60), chaque porte logique ET principale (64) étant de type ET et ayant respectivement une première entrée (64a), une seconde entrée (64b) et une sortie (64c), dans lequel la première entrée (64a) de chaque porte logique ET principale (64ᵢ) est connectée à une sortie (62bᵢ) respective du décodeur (62), la seconde entrée (64b) de chaque porte logique ET principale (64ᵢ) forme l'entrée d'autorisation d'écriture (50b) du banc de registres (50) et est configurée pour recevoir le signal d'autorisation d'écriture (WR_EN) et la sortie (64c) de chaque porte logique ET principale (64ᵢ) est connectée à l'entrée d'autorisation d'écriture (60b) d'un registre (60ᵢ) respectif des registres (60).

6. Processeur (10) électronique selon l'une quelconque des revendications précédentes, comprenant en outre :
- un registre d'instructions (12) qui comprend une multiplicité de registres de mémoire et est configuré pour stocker une ou plusieurs instructions devant être exécutées par le processeur (10) ;
- une unité de chargement et de stockage (14), qui comprend une multiplicité respective d'autres registres de mémoire et est configurée pour stocker des données utilisables par le processeur (10) ; et
- une unité arithmétique logique (32),
dans lequel le multiplexeur de donnée d'entrée (52) a en outre une troisième entrée (52c),
dans lequel la première entrée (52a) est connectée à l'unité de chargement et de stockage (14) pour recevoir la donnée de fonctionnement correspondant à une donnée (D_SENS) de capteur stockée dans l'unité de chargement et de stockage (14), la deuxième entrée (52b) est connectée à un nœud de référence (GND) du processeur (10) électronique pour acquérir la donnée d'initialisation (D_INIT), la troisième entrée (52c) est connectée à l'unité arithmétique logique (32) pour recevoir une donnée (D_ALU) ALU générée par l'unité arithmétique logique (32),
dans lequel le multiplexeur de donnée d'entrée (52) est configuré pour transmettre à la sortie (52d) une parmi la donnée (D_SENS) de capteur, la donnée (D_ALU) ALU et la donnée d'initialisation (D_INIT), sur la base du signal de commande (SEL).

7. Procédé d'initialisation d'un banc de registres (50) d'un processeur (10) électronique selon l'une quelconque des revendications 1 à 6, le procédé d'initialisation comprenant, en mode d'initialisation de l'au moins un registre (60) de la première pluralité de registres (60), les étapes suivantes :
a. le réglage, par l'unité de commande (20) et en mode d'initialisation, du signal de commande (SEL) de sorte que le multiplexeur de donnée d'entrée (52) transmette à la sortie (52d) la donnée d'initialisation (D_INIT) ;
b. le réglage, par l'unité de commande (20) et en mode d'initialisation, du signal d'autorisation d'écriture (WR_EN) sur une valeur identifiant l'autorisation de la mise à jour de l'au moins un registre (60) à initialiser ;
c. le réglage, par l'unité de commande (20) et en mode d'initialisation, du signal d'adresse d'écriture (WR_ADDR) sur une valeur identifiant l'adresse de l'au moins un registre (60) à initialiser ;
d. la réception, dans le mode d'initialisation et par le banc de registres (50), de la donnée d'initialisation (D_INIT) ;
e. la réception, dans le mode d'initialisation et par le banc de registres (50), du signal d'autorisation d'écriture (WR_EN) identifiant l'autorisation de la mise à jour de l'au moins un registre (60) à initialiser ;
f. la réception, en mode d'initialisation et par le banc de registres (50), du signal d'adresse d'écriture (WR_ADDR) identifiant une adresse de l'au moins un registre (60) à initialiser ; et
g. en réponse à la réception du signal d'autorisation d'écriture (WR_EN), le stockage, par le banc de registres (50), de la donnée d'initialisation (D_INIT) dans l'au moins un registre (60) à initialiser.

8. Procédé d'initialisation selon la revendication 7, comprenant la réalisation des étapes c à g pour chaque registre (60) de la première pluralité de registres (60) du banc de registres (50).

9. Procédé d'initialisation selon la revendication 7 ou 8, dans lequel chaque registre (60) comprend une seconde pluralité d'éléments de mémoire (70), et
dans lequel la donnée d'initialisation (D_INIT) est formée par un nombre de bits égal à ladite seconde pluralité, chaque bit de la donnée d'initialisation (D_INIT) étant égal à une valeur d'initialisation (« 0 »).

10. Procédé de commande (100) d'un processeur (10) électronique selon l'une quelconque des revendications 1 à 6,
le procédé de commande (100) comprenant les étapes suivantes :
- la commande du processeur (10) électronique dans un état inconnu par défaut (104) jusqu'à la réception par l'unité de commande (20) d'un signal de réinitialisation (RST) indiquant une demande d'initialisation des registres (60) du banc de registres (50) ;
- en réponse (106) à la réception par l'unité de commande (20) du signal de réinitialisation (RST) et jusqu'à (110) ce qu'un signal de fin d'initialisation (DONE) soit généré par l'unité de commande (20), indiquant la fin de l'initialisation des registres (60) du banc de registres (50), l'initialisation des registres (60) du banc de registres (50) par le biais d'un procédé d'initialisation selon l'une quelconque des revendications 7 à 9 ;
- en réponse (110) à la génération par l'unité de commande (20) du signal de fin d'initialisation (DONE) et jusqu'à (114) ce qu'un signal de début d'opération (START) soit reçu par le processeur (10) électronique, indiquant un début d'exécution d'instruction, la commande du processeur (10) dans un état de repos (112) ; et
- en réponse (114) à la réception par l'unité de commande (20) du signal de début d'opération (START), la commande du processeur (10) dans un état d'exécution d'opération (116-124).

11. Procédé de commande (100) selon la revendication 10, dans lequel l'étape de commande du processeur (10) dans l'état d'exécution d'opération (116-124) comprend, en mode d'écriture d'au moins un registre (60) de la première pluralité de registres (60) :
- la réception, dans le mode d'écriture et par le biais du banc de registres (50), de la donnée (D_SENS ; D_ALU) de fonctionnement ;
- la réception, en mode d'écriture et par le biais du banc de registres (50), du signal d'autorisation d'écriture (WR_EN) identifiant l'autorisation de la mise à jour de l'au moins un registre (60) à écraser ;
- la réception, en mode d'écriture et par le biais du banc de registres (50), du signal d'adresse d'écriture (WR_ADDR) identifiant l'adresse de l'au moins un registre (60) à écraser ; et
- en réponse à la réception du signal d'autorisation d'écriture (WR_EN), le stockage, par le biais du banc de registres (50), de la donnée (D_SENS ; D_ALU) de fonctionnement dans l'au moins un registre (60) à écraser.

12. Produit programme d'ordinateur comprenant des instructions qui, lorsque le programme est exécuté par le processeur (10) électronique selon l'une quelconque des revendications 1 à 6, amènent le processeur à effectuer un procédé d'initialisation d'un banc de registres (50) du processeur (10) électronique, selon l'une quelconque des revendications 7 à 9, ou un procédé de commande du processeur (10) électronique, selon l'une quelconque des revendications 10 et 11.
